# FASCICULE DE BREVET EUROPEEN

(11) **EP 1 733 189 B1**
(45) Date de publication et mention de la délivrance du brevet: **23.11.2016**
(21) Numéro de dépôt: 05750013.4
(22) Date de dépôt: 01.04.2005
(51) Int. Cl.: G01D 5/14, G01P 3/487

(54) **CODEUR POUR ARBRE, DISPOSITIF COMPRENANT UN TEL CODEUR ET PROCEDE DE FABRICATION D'UN TEL CODEUR**
CODIERER FÜR EINE WELLE, EINEN SOLCHEN CODIERER UMFASSENDE EINRICHTUNG UND HERSTELLUNGSVERFAHREN DAFÜR
ENCODER FOR SHAFT, DEVICE COMPRISING ONE SUCH ENCODER AND PRODUCTION METHOD THEREOF

(30) Priorité: 05.04.2004 FR 0403557
(43) Date de publication de la demande: 20.12.2006
(73) Titulaire: Hutchinson, 75008 Paris (FR)
(72) Inventeur: BRANCHEREAU, Bernard, F-49500 Segre (FR); FAYAUD, Patrick, F-49000 Angers (FR)
(74) Mandataire: Cabinet Plasseraud
(86) Numéro de dépôt international: PCT/FR2005/000801
(87) Numéro de publication internationale: WO 2005/100923

(56) Documents cités:
- EP-A- 0 949 510
- WO-A1-98/44313
- US-A- 3 848 878
- US-A- 5 713 577
- US-A1- 2002 140 418
- US-B1- 6 595 693

## Description

La présente invention se rapporte à un codeur de déplacement pour arbre mobile, et plus particulièrement, à un codeur comprenant un manchon destiné à être calé sur l'arbre, et un élément codeur en polymère magnétisable qui est solidaire du manchon, l'élément codeur présentant une zone codeuse munie d'au moins un repère polarisé.

Dans de nombreuses applications, et notamment pour des arbres de roues, des arbres de sortie de boîtes de vitesse ou des vilebrequins de moteurs à combustion interne, on équipe les arbres rotatifs de dispositif de codage de déplacement angulaire pour connaître leur vitesse de rotation instantanée et/ou leur position angulaire et/ou leur sens de rotation.

La fonction de codage peut être réalisée par un ou plusieurs repères magnétiques polarisés. Dans ce cas, il est avantageux de réaliser les repères magnétiques à l'aide d'un polymère magnétisable, c'est-à-dire un polymère de type élastomère, ou tout autre matière pouvant assurer une fonction de liant, et contenant une forte proportion de particules magnétiques comme par exemple de la poudre de ferrite. En effet, de tels polymères magnétisables peuvent être configurés dans des formes variées par moulage et leur fixation à un support peut être réalisée par adhérisation directe.

Toutefois, ce type de codeur peut s'avérer défaillant dans certains types d'applications sévères, la durée de vie du codeur étant alors réduite.

Les inventeurs ont déterminé que cet inconvénient était lié à la fragilité du polymère magnétisable. En effet, du fait de la forte proportion de particules magnétiques, ces polymères sont relativement friables. Par conséquent, dans certaines applications où le codeur angulaire est particulièrement exposé à des particules abrasives, comme par exemple des poussières ou du sable, un effritement du polymère magnétisable apparaît. Ceci peut entraîner une diminution du signal magnétique jusqu'à une valeur si faible qu'il ne puisse plus être détecté par le capteur magnétique disposé en regard du codeur angulaire.

Il est également possible dans certaines applications où l'arbre effectue un mouvement linéaire, par exemple un mouvement de va-et-vient, d'avoir une abrasion d'un codeur de déplacement linéaire en polymère magnétisable qui permet de déterminer la position ou la vitesse de déplacement linéaire de l'arbre.

Le document US-2002/140418 décrit un rotor pour capteur de rotation pour roulement de roue d'un véhicule automobile. Le rotor comprend un anneau de renfort en forme de L en coupe transversale, un aimant multipôles fixé sur une portion en collerette de l'anneau de renfort, et un revêtement nom magnétique, par exemple en acier inoxydable, pour enfermer l'aimant multipôles. Ce revêtement n'est pas en un polymère, tel que du PTFE.

Le document US-3 848 878 décrit un capteur adapté pour fournir un signal comprenant des impulsions à une fréquence proportionnelle à la vitesse de rotation d'une roue d'un véhicule automobile. Le capteur comprend un joint en PTFE pour éviter l'intrusion de particules. Mais ce joint ne protège pas la zone codeuse.

Le document US-5 713 577 décrit un joint, par exemple pour roulement de roue d'un véhicule automobile équipé d'un système d'antiblocage de roue. Ce joint comprend un anneau support radial, un anneau multipolaire magnétisable placé dur une face de l'anneau support, et des premier et second éléments d'étanchéité ayant une portion continue recouvrant l'anneau multipolaire magnétisable. Mais les éléments d'étanchéité ne sont pas en PTFE, pour résister à l'agression de particules abrasives.

La présente invention a pour but de pallier ces inconvénients en proposant un codeur de déplacement comprenant un élément codeur en polymère magnétisable, qui puisse être utilisé dans un environnement agressif sans perte notable du signal magnétique au cours du temps.

A cet effet, la présente invention a pour objet un codeur de déplacement angulaire ou linéaire du type précité caractérisé en ce qu'au moins la zone codeuse de l'élément codeur est recouverte par une couche de protection réalisée en PTFE, polymère qui présente une résistance superficielle à l'abrasion supérieure au polymère magnétisable.

Grâce à la résistance de cette couche de protection, le polymère magnétisable n'est plus attaqué par les particules abrasives qui peuvent être présentes dans l'environnement de l'élément codeur. Celui-ci se prête donc particulièrement bien au codage de la position angulaire d'un arbre de roue pour réaliser une fonction antiblocage (ABS) d'un véhicule, ou toute autre application dans laquelle le codeur est exposé à un environnement mécaniquement agressif.

En outre, la couche de protection en PTFE présente l'avantage d'être anti-adhérente de sorte que l'accumulation de poussières sur l'élément codeur est évitée.

Dans des modes de réalisation préférés de l'invention, on a recours, en outre, à l'une ou à l'autre des dispositions suivantes :
- l'élément codeur est en élastoferrite, qui présente l'avantage de pouvoir adhérer directement à la fois sur le métal et sur le PTFE ;
- la couche de protection adhère directement sur l'élément codeur, ce qui simplifie sa fabrication ;
- une lèvre annulaire venue de matière avec la couche de protection est destinée à venir en contact avec un carter fixe entourant l'arbre, de manière à ce que le codeur assure également une fonction de joint dynamique d'étanchéité ;

- l'élément codeur présente au moins une surface annulaire s'étendant radialement par rapport à l'arbre, sur laquelle est formée la zone codeuse, la couche de protection couvrant ladite surface annulaire de l'élément codeur ;
- la couche de protection et la lèvre annulaire sont formées par un anneau sensiblement plat ; ou bien
- la couche de protection est surmoulée sur l'élément codeur.

L'invention se rapporte également à un dispositif comprenant un arbre et un codeur de déplacement qui comprend un manchon calé sur l'arbre et un élément codeur en polymère magnétisable solidaire dudit manchon, l'élément codeur présentant une zone codeuse munie d'au moins un repère polarisé et adaptée pour coder un déplacement, caractérisé en ce qu'au moins la zone codeuse de l'élément codeur est recouverte par une couche de protection réalisée en PTFE, polymère qui présente une résistance superficielle à l'abrasion supérieure au polymère magnétisable.

Ce dispositif peut comprendre un arbre rotatif, un manchon calé en rotation sur l'arbre et la zone codeuse adaptée pour coder un déplacement angulaire.

Ce dispositif peut comprendre en outre un carter rempli de liquide dans lequel pénètre l'arbre rotatif, et dans lequel une lèvre annulaire, venue de matière avec la couche de protection, est en contact glissant avec le carter et assure l'étanchéité entre ledit arbre et ledit carter.

Ce dispositif peut comprendre alternativement un arbre coulissant selon la direction longitudinale de celui-ci, un manchon calé en translation sur l'arbre et la zone codeuse adaptée pour coder un déplacement linéaire.

Par ailleurs, l'invention a pour objet un procédé de fabrication d'un codeur angulaire tel que défini précédemment qui comprend un manchon, un élément codeur annulaire en élastoferrite et une couche de protection en un polymère qui présente une résistance superficielle à l'abrasion supérieure à l'élastoferrite, caractérisé :
- en ce qu'on place concentriquement dans un premier demi moule ledit manchon, une ébauche dudit élément codeur et une préforme de ladite couche de protection, ladite ébauche étant au moins partiellement en contact avec ledit manchon et ladite préforme étant au moins partiellement en contact avec ladite ébauche ; et
- en ce qu'on effectue un pressage à chaud à l'aide d'un deuxième demi moule pour vulcaniser ladite ébauche de l'élément codeur.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe longitudinale simplifiée d'un arbre muni d'un codeur angulaire selon un premier mode de réalisation de l'invention ;
- la figure 2 est une vue en coupe analogue à la figure 1 d'un deuxième mode de réalisation ;
- la figure 3 est une vue en coupe analogue à la figure 1 d'un troisième mode de réalisation ;
- la figure 4 est une vue en coupe analogue à la figure 1 d'un quatrième mode de réalisation.

Sur les différentes figures, on a conservé les mêmes références pour désigner des éléments identiques ou similaires.

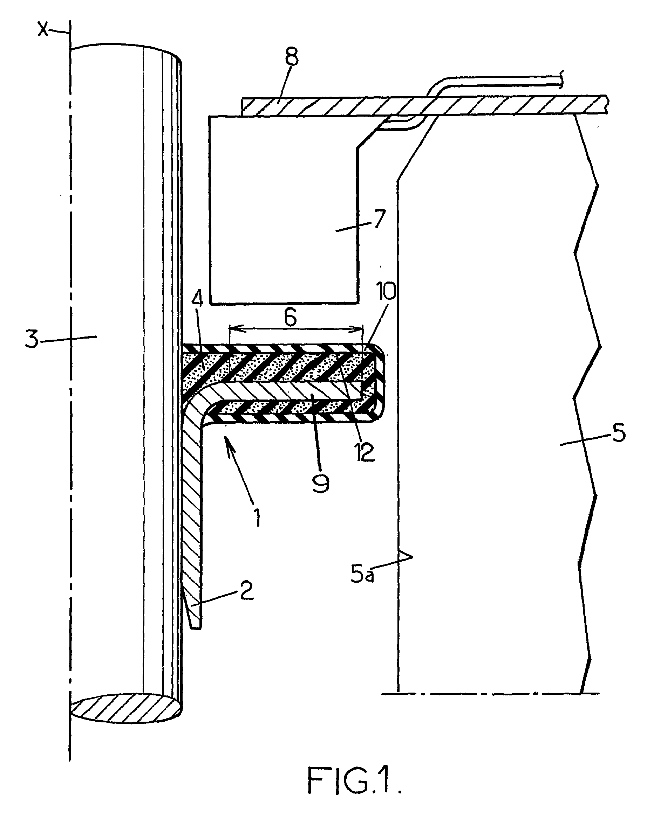

Comme on peut le voir sur la figure 1, le codeur angulaire 1 comprend un manchon 2 calé en rotation sur un arbre rotatif 3 et un élément codeur en polymère magnétisable 4. Des repères polarisés sont prévus dans une zone 6, dite zone codeuse de l'élément codeur.

Un carter fixe 5 entourant le codeur angulaire 1 sert de base fixe pour un capteur 7 solidarisé au carter par l'intermédiaire d'une platine 8.

L'arbre rotatif 3 peut être constitué par tout arbre de machine tournante, comme par exemple un arbre de transmission ou un arbre de roue. On notera que le codeur angulaire 1 n'est pas nécessairement placé sur une portion de l'arbre entouré par un carter fixe, mais peut être placé à distance de tout carter ou pallier du moment qu'un capteur peut être maintenu à proximité de la zone codeuse 6.

Le manchon 2 est métallique et est monté sur l'arbre rotatif 3 par emmanchement à force. Ce montage particulièrement simple permet d'immobiliser le manchon 2 en rotation et en translation par rapport à l'arbre 3. Mais on peut utiliser tout autre montage qui assure une immobilisation en rotation du manchon par rapport à l'arbre. Il est également envisageable d'utiliser un manchon en matière plastique.

L'élément codeur 4 est en élastoferrite, c'est-à-dire qu'il comprend une base de polymère de type élastomère qui assure le rôle de liant, et comprend une forte proportion de particules de ferrite dont l'orientation magnétique peut être fixée lors de la vulcanisation de l'élastomère afin de créer des repères polarisés. Toutefois, il est possible d'utiliser d'autres types de polymère magnétisable.

Dans le mode de réalisation représenté, l'élément codeur 4 est surmoulé sur un collet radial 9 du manchon 2 et est solidarisé avec celui-ci par adhérisation directe. Mais, l'élément codeur peut être fixé mécaniquement, ou à l'aide d'une colle, au manchon. L'élément codeur 4 ainsi réalisé présente une forme annulaire et s'étend globalement selon une direction radiale par rapport à l'arbre 3.

Les repères polarisés de la zone codeuse 6 sont formés par une succession de secteurs angulaires polarisés alternativement nord-sud, avec éventuellement un secteur non polarisé ou une zone polarisée qui est plus étendue ou plus réduite que les autres, afin de déterminer une position angulaire absolue de l'arbre. La zone codeuse forme donc une piste circulaire dans ce mode de réalisation. Toutefois, si le codeur angulaire est utilisé uniquement pour détecter une rotation ou un sens de rotation de l'arbre, la présence de repères polarisés sur l'ensemble du pourtour du manchon 2 n'est pas nécessaire et dans ce cas l'élément codeur 4 peut se présenter sous la forme d'un ou deux éléments adhérisés sur le manchon.

Le capteur 7 doit être adapté pour détecter une variation du champ magnétique et pour cela on peut utiliser notamment un capteur à effet hall. Le capteur 7 est positionné de manière statique en regard de la zone codeuse circulaire 6 formée par les repères polarisés et à une distance suffisamment proche pour détecter les variations du champ magnétique.

La zone codeuse 6 de l'élément codeur est recouverte par une couche de protection 10 en polymère. Ce polymère est choisi de manière à présenter une résistance superficielle supérieure à celle du polymère magnétisable formant l'élément codeur 4. Ainsi, l'abrasion qui peut être provoquée par la présence de particules ou de grains de sable dans l'environnement du codeur angulaire est évitée et sa durée de vie est augmentée.

Différents polymères peuvent être mis en oeuvre pour réaliser la couche de protection et notamment les polymères thermoplastiques, qui présentent une résistance à l'abrasion suffisante, mais aussi une bonne transparence aux champs magnétiques et de bonnes propriétés d'adhésion à l'élastomère.

Toutefois, dans le mode de réalisation représenté, la couche de protection 10 est en PTFE, également désignée par la marque TEFLON®. Ce type de polymère présente une résistance superficielle très supérieure à l'élastoferrite et à la plupart des polymères magnétisables qui sont relativement friables du fait de la proportion importante de particules magnétiques qu'ils contiennent. Le PTFE a de plus des propriétés anti-adhérentes, ce qui évite l'accumulation de poussières ou de liquide visqueux sur la face extérieure de la couche de protection.

Par ailleurs, le PTFE n'est pas attaqué par la plupart des produits chimiques, de sorte que la couche 10 forme également une protection contre les solvants, carburants et autres produits agressifs que l'on peut rencontrer dans l'environnement du codeur.

La couche de protection 10 peut être maintenue en regard de la zone codeuse 6 par adhérisation directe sur le polymère magnétisable, ce qui simplifie la fabrication et offre une bonne tenue mécanique aux efforts. Mais il est également envisageable de maintenir en place la couche de protection 10 par collage et éventuellement avec des renforts de fixation mécaniques.

La couche de protection 10 doit essentiellement couvrir la zone codeuse 6 pour éviter une perte de matières de l'élément codeur 4 à ce niveau, ce qui entraînerait une diminution du signal magnétique. Mais, comme on peut le voir sur la figure 1, la couche de protection s'étend sur l'ensemble de la surface extérieure de l'élément codeur 4 pour éviter toute abrasion de celui-ci qui pourrait entraîner une désolidarisation du manchon 2 ou une perte du rôle d'écran que peut avoir le codeur angulaire entre l'arbre 3 et le carter fixe 5.

Le recouvrement de la majeure partie de l'élément codeur 4 est effectué par surmoulage dans le mode de réalisation représenté à la figure 1. La couche de protection 10 surmoulée présente une épaisseur suffisamment fine pour ne pas augmenter l'épaisseur de l'entrefer séparant le capteur 7 de la zone codeuse 6. On notera que la couche de protection 10 en polymère, et notamment en PTFE, n'a aucune influence notable sur la propagation du champ magnétique créé par les repères polarisés.

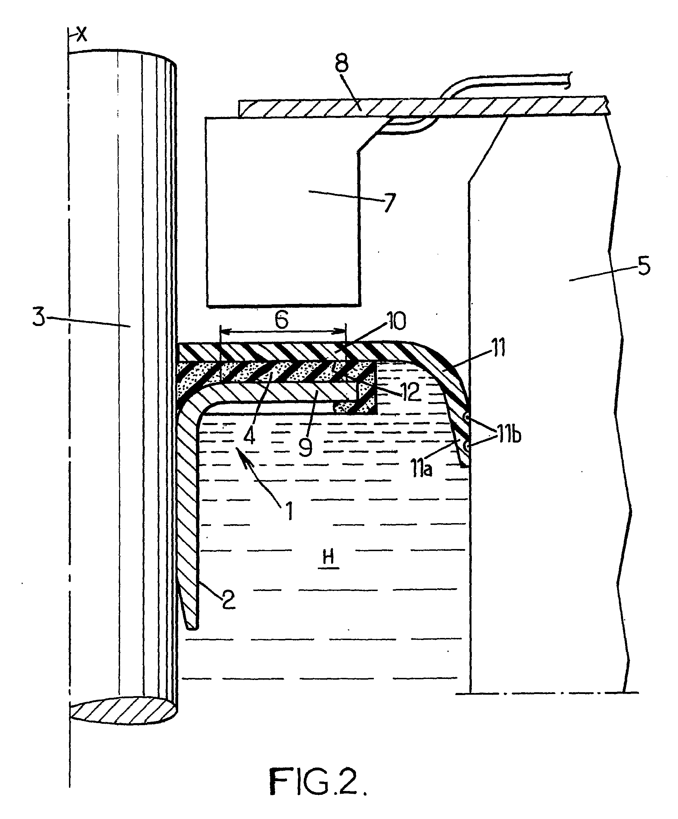

A la figure 2, est représenté un deuxième mode de réalisation du codeur angulaire 1 dans lequel la couche de protection 10 s'étend radialement par rapport à l'arbre 3 au-delà de l'élément codeur 4 jusqu'à venir en contact avec le carter fixe 5. Ainsi, la couche de protection forme une lèvre d'étanchéité 11 en contact rotatif glissant avec le carter 5. On notera que le fait que la couche de protection 10 et la lèvre 11 venue de matière avec celle-ci, soient en PTFE, est particulièrement intéressant à cause du faible coefficient de friction du PTFE.

Le codeur angulaire 1 ainsi réalisé remplit une fonction de joint dynamique d'étanchéité en plus de sa fonction de codage. Ce deuxième mode de réalisation du codeur angulaire est donc tout particulièrement destiné à un dispositif tel qu'un moteur ou une boîte de vitesse, dans lequel le carter 5 rempli d'un liquide H, éventuellement sous pression, est traversé par un arbre 3, pour assurer l'étanchéité entre l'arbre et le carter.

Dans le mode de réalisation représenté à la figure 2, la base de la lèvre 11 s'étend sensiblement dans le prolongement de la couche de protection 10 et est recourbée dans la configuration représentée lors de la mise en place du codeur angulaire sur l'arbre 3. L'extrémité 11a de la lèvre peut comporter sur sa surface en contact avec le carter fixe 5, des gorges 11b qui améliorent l'étanchéité dynamique entre la lèvre et la surface radiale 5a du carter en regard de l'arbre 3.

Il est bien entendu possible que la lèvre 11 présente une configuration géométrique plus complexe pour s'adapter à la configuration de la surface avec laquelle elle doit venir en contact ou pour augmenter ses propriétés d'étanchéité.

L'élément codeur 4 présente une surface annulaire 12 s'étendant radialement et orientée selon l'axe longitudinal X de l'arbre vers l'extérieur du carter 5. La surface annulaire 12 est entièrement recouverte par la couche de protection 10, ce qui offre une protection de l'ensemble de l'élément codeur du fait de la présence de la lèvre 11 qui empêche l'entrée de particules abrasives à l'intérieur du carter 5. Mais la surface annulaire pourrait être partiellement recouverte, notamment si la zone codeuse ne s'étendait pas sur l'ensemble de celle-ci.

On notera que cette configuration de l'élément codeur 4 et de la lèvre d'étanchéité 11 permet de réaliser la couche de protection 10 à partir d'un anneau sensiblement plat, ou rondelle, qui présente l'avantage d'être une pièce de géométrie simple et par conséquent peu onéreuse. Mais, dans le cas où l'élément codeur 4 est formé par un ou plusieurs éléments fixés sur le manchon 2, il est possible de réaliser la lèvre 11 à partir d'un anneau plat et la (ou les) couche(s) de protection 10 par des formes s'étendant radialement vers l'intérieur depuis l'anneau plat formant la lèvre 11.

Dans le cas où l'élément codeur 4 représenté à la figure 2 est en élastoferrite, on peut fabriquer le codeur angulaire 1 selon le procédé suivant :
- on place concentriquement dans un premier demi-moule le manchon 2, au moins une ébauche de l'élément codeur 4 et une préforme de la couche de protection 10, de manière à ce que l'ébauche de l'élément codeur 4 soit au moins partiellement en contact avec le manchon 2 et de manière à ce que la préforme de la couche de protection recouvre au moins les zones codeuses 6 de l'élément codeur 4 ; et
- on effectue un pressage à chaud à l'aide d'un deuxième demi moule pour vulcaniser l'ébauche de l'élément codeur 4 et éventuellement conformer la couche de protection 10 selon une configuration particulière. Ce procédé permet d'assembler les différents éléments du codeur angulaire, à savoir le manchon 2, l'élément codeur 4 et la couche de protection 10 en une seule opération. Dans le cas où la couche de protection 10 s'étend pour former une lèvre d'étanchéité 11, il est également possible de donner à la partie de la préforme formant la lèvre 11, une configuration géométrique particulière. Ceci permet de réaliser un élément codeur présentant une lèvre d'étanchéité dynamique en une seule opération de pressage à chaud.

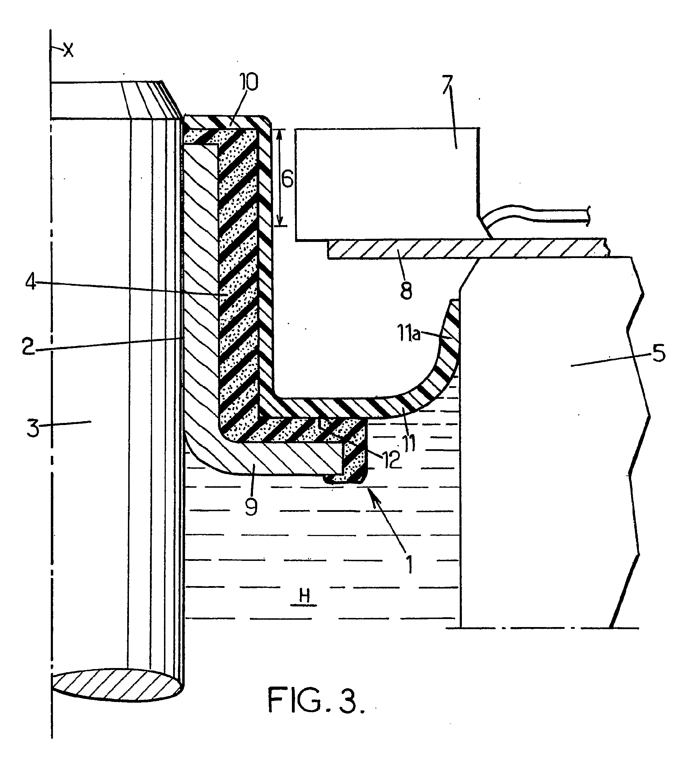

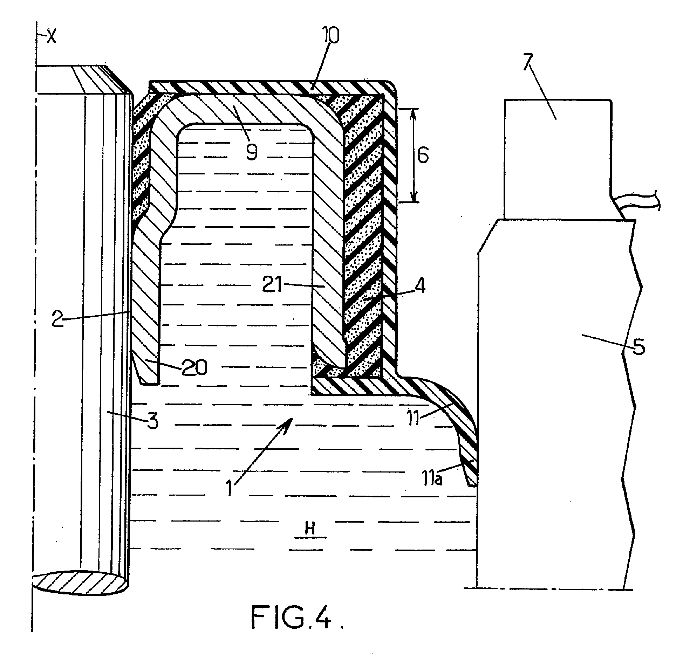

Aux figures 3 et 4 sont représentés deux modes de réalisations supplémentaires qui sont analogues au deuxième mode, c'est-à-dire comportant une lèvre 11 intégralement formée avec la couche de protection 10.

Dans le troisième mode représenté à la figure 3, la zone codeuse 6 s'étend longitudinalement et est orientée radialement vers le capteur 4 disposé en regard.

La couche de protection 10 couvre bien entendu la zone codeuse 6, mais aussi toute la surface extérieure de l'élément codeur et protège ainsi l'ensemble de celui-ci contre les agressions mécaniques ou chimiques provenant de l'extérieur du carter.

La lèvre 11 est adhérisée sur la surface annulaire 12, tout comme dans le deuxième mode de réalisation, mais son épaisseur est supérieure à celle de la partie de la couche 10 recouvrant la zone codeuse 6.

Dans le quatrième mode de réalisation, le manchon 2 présente une section en U, une première branche 20 du U venant enserrer l'arbre 3, une deuxième branche 21 supportant l'élastoferrite 4 et la base 9 du U permettant de combler une partie du jeu entre l'arbre 3 et le carter 5.

Bien entendu, les modes de réalisation décrits précédemment ne sont nullement limitatifs. Il est notamment possible de réaliser un codeur angulaire dont l'élément codeur ne s'étend pas selon une direction radiale ou longitudinale, mais selon une direction inclinée par rapport à l'arbre.

Par ailleurs, il apparaîtra à l'Homme du métier que l'invention peut être appliquée à un codeur linéaire, solidaire d'un arbre coulissant, dont l'élément codeur en polymère magnétisable présente au moins une zone codeuse. Dans ce type d'application, la zone codeuse comporte un repère polarisé, ou plusieurs repères polarisés répartis selon la direction de coulissement de l'arbre, afin d'être adapté pour coder un déplacement linéaire. Selon l'invention, cette zone codant un déplacement linéaire est recouverte par une couche de polymère présentant une résistance à l'abrasion supérieure au polymère magnétisable.

## Revendications

1. Codeur de déplacement pour arbre mobile comprenant un manchon (2) destiné à être calé sur l'arbre (3), et un élément codeur (4) en polymère magnétisable solidaire dudit manchon, l'élément codeur présentant une zone codeuse (6) munie d'au moins un repère polarisé, **caractérisé en ce qu'**au moins la zone codeuse de l'élément codeur est recouverte par une couche de protection (10) réalisée en PTFE, polymère qui présente une résistance superficielle à l'abrasion supérieure au polymère magnétisable.

2. Codeur selon la revendication 1, dans lequel l'élément codeur (4) est en élastoferrite.

3. Codeur selon la revendication 1 ou 2, dans lequel la couche de protection (10) adhère directement sur l'élément codeur (4).

4. Codeur selon l'une quelconque des revendications 1 à 3, dans lequel une lèvre annulaire (11) venue de matière avec la couche de protection (10) est destinée à venir en contact avec un carter fixe (5) entourant l'arbre (3).

5. Codeur selon l'une quelconque des revendications 1 à 4, dans lequel l'élément codeur (4) présente au moins une surface annulaire (12) s'étendant radialement par rapport l'arbre, sur laquelle est formée la zone codeuse (6), la couche de protection (10) couvrant ladite surface annulaire de l'élément codeur.

6. Codeur selon les revendications 4 et 5, dans lequel la couche de protection (10) et la lèvre annulaire (11) sont formées par un anneau sensiblement plat.

7. Codeur selon l'une quelconque des revendications 1 à 5, dans lequel la couche de protection (10) est surmoulée sur l'élément codeur (6).

8. Dispositif comprenant un arbre et un codeur de déplacement selon la revendication 1 qui comprend un manchon (2) calé sur l'arbre.

9. Dispositif selon la revendication 8, dans lequel l'arbre est un arbre rotatif (3), le manchon (2) est calé en rotation sur l'arbre (3) et la zone codeuse est adaptée pour coder un déplacement angulaire.

10. Dispositif selon la revendication 9, comprenant en outre un carter (5) rempli de liquide (H) dans lequel pénètre l'arbre rotatif (3), et dans lequel une lèvre annulaire (11), venue de matière avec la couche de protection (10), est en contact glissant avec le carter et assure l'étanchéité entre ledit arbre et ledit carter.

11. Dispositif selon la revendication 8, dans lequel l'arbre est un arbre coulissant selon la direction longitudinale de celui-ci, le manchon est calé en translation sur l'arbre et la zone codeuse est adaptée pour coder un déplacement linéaire.

12. Procédé de fabrication d'un codeur selon l'une quelconque des revendications 1 à 6, comprenant un manchon (2), un élément codeur (4) en élastoferrite et une couche de protection (10) en PTFE, polymère qui présente une résistance superficielle à l'abrasion à l'élastoferrite, **caractérisé :**
- **en ce qu'**on place concentriquement dans un premier demi moule ledit manchon (2), une ébauche dudit élément codeur (4) et une préforme de ladite couche de protection (10), ladite ébauche étant au moins partiellement en contact avec ledit manchon et ladite préforme recouvrant au moins partiellement la zone codeuse (6) de l'ébauche de l'élément codeur ; et
- **en ce qu'**on effectue un pressage à chaud à l'aide d'un deuxième demi moule pour vulcaniser ladite ébauche de l'élément codeur.

## Patentansprüche

1. Wegcodierer für eine bewegliche Welle mit einer Manschette (2), die dazu bestimmt ist, an die Welle (3) gekoppelt zu werden, und einem Codierelement (4) aus einem magnetisierbaren Polymer, das fest mit der Manschette verbunden ist, wobei das Codierelement einen Codierbereich (6) aufweist, der mit mindestens einer polarisierten Markierung versehen ist, **dadurch gekennzeichnet, dass** mindestens der Codierbereich des Codierelements mit einer Schutzschicht (10) bedeckt ist, die aus PTFE ausgeführt ist, einem Polymer, das eine höhere oberflächliche Abriebfestigkeit als das magnetisierbare Polymer aufweist.

2. Codierer nach Anspruch 1, wobei das Codierelement (4) aus Elastoferrit besteht.

3. Codierer nach Anspruch 1 oder 2, wobei die Schutzschicht (10) direkt auf dem Codierelement (4) haftet.

4. Codierer nach einem beliebigen der Ansprüche 1 bis 3, wobei eine ringförmige Lippe (11), die einstückig mit der Schutzschicht (10) ausgebildet ist, dazu bestimmt ist, mit einem festen Gehäuse (5), das die Welle (3) umgibt, in Kontakt zu kommen.

5. Codierer nach einem beliebigen der Ansprüche 1 bis 4, wobei das Codierelement (4) mindestens eine ringförmige Oberfläche (12) aufweist, die sich radial in Bezug auf die Welle erstreckt, auf welcher der Codierbereich (6) gebildet ist, wobei die Schutzschicht (10) die ringförmige Fläche des Codierelements bedeckt.

6. Codierer nach den Ansprüchen 4 und 5, wobei die Schutzschicht (10) und die ringförmige Lippe (11) durch einen im Wesentlichen flachen Ring gebildet werden.

7. Codierer nach einem beliebigen der Ansprüche 1 bis 5, wobei die Schutzschicht (10) an das Codierelement (6) angeformt ist.

8. Vorrichtung mit einer Welle und einem Wegcodierer nach Anspruch 1, die eine an die Welle gekoppelte Manschette (2) umfasst.

9. Vorrichtung nach Anspruch 8, wobei die Welle eine drehende Welle (3) ist, die Manschette (2) drehfest mit der Welle (3) gekoppelt ist und der Codierbereich geeignet ist, eine Winkelbewegung zu codieren.

10. Vorrichtung nach Anspruch 9, die darüber hinaus ein mit einer Flüssigkeit (H) gefülltes Gehäuse (5) umfasst, in das die drehende Welle (3) eindringt und in dem eine ringförmige Lippe (11), die einstückig mit der Schutzschicht (10) ausgebildet ist, in gleitendem Kontakt mit dem Gehäuse steht und die Dichtigkeit zwischen der Welle und dem Gehäuse sicherstellt.

11. Vorrichtung nach Anspruch 8, wobei die Welle eine in Längsrichtung verschiebliche Welle ist, die Manschette längsunverschieblich auf der Welle angebracht ist und der Codierbereich geeignet ist, eine lineare Bewegung zu codieren.

12. Verfahren zur Herstellung eines Codierers nach einem beliebigen der Ansprüche 1 bis 6 mit einer Manschette (2), einem Codierelement (4) aus Elastoferrit und einer Schutzschicht (10) aus PTFE, einem Polymer, das eine höhere oberflächliche Abriebfestigkeit als das Elastoferrit aufweist, **dadurch gekennzeichnet:**
- **dass** in einer ersten Formwerkzeughälfte konzentrisch die Manschette (2), ein Rohling des Codierelements (4) und eine Vorform der Schutzschicht (10) platziert werden, wobei der Rohling mindestens teilweise in Kontakt mit der Manschette ist und die Vorform mindestens teilweise den Codierbereich (6) des Rohlings des Codierelements überdeckt; und
- **dass** eine Heißpressung mithilfe einer zweiten Formwerkzeughälfte vorgenommen wird, um den Rohling des Codierelements zu vulkanisieren.

## Claims

1. A displacement encoder for movable shaft comprising a sleeve (2) intended to be fastened onto the shaft (3), and an encoder element (4) made of magnetizable polymer attached to said sleeve, the encoder element exhibiting an encoding zone (6) furnished with at least one polarized mark, **characterized in that** at least the encoding zone of the encoding element is covered with a protective layer (10) made of PTFE, a polymer which exhibits a greater surface abrasion resistance than the magnetizable polymer.

2. The encoder as claimed in claim 1, in which the encoder element (4) is made of elastoferrite.

3. The encoder as claimed in claims 1 or claim 2, in which the protective layer (10) sticks directly to the encoder element (4).

4. The encoder as claimed in any one of claims 1 to 3, in which an annular lip (11) made in one piece with the protective layer (10) is intended to come into contact with a fixed casing (5) surrounding the shaft (3).

5. The encoder as claimed in any one of claims 1 to 4, in which the encoder element (4) exhibits at least one annular surface (12) extending radially with respect to the shaft, and on which is formed the encoding zone (6), the protective layer (10) covering said annular surface of the encoder element.

6. The encoder as claimed in claims 4 and 5, in which the protective layer (10) and the annular lip (11) are formed by a substantially flat annulus.

7. The encoder as claimed in any one of claims 1 to 5, in which the protective layer (10) is overmolded over the encoder element (6).

8. A device comprising a shaft and a displacement encoder as claimed in claim 1 which comprises a sleeve (2) fastened to the shaft.

9. The device as claimed in claim 8, in which the shaft is a rotary shaft (3), the sleeve is fastened in rotation to the shaft (3) and the encoding zone is adapted to encode an angular displacement.

10. The device as claimed in claim 9 furthermore comprising a casing (5) filled with liquid (H) in which the rotary shaft (3) penetrates, and in which an annular lip (11), made in one piece with the protective layer (10), is in sliding contact with the casing and ensures leaktightness between said shaft and said casing.

11. The device as claimed in claim 8, in which the shaft is a shaft sliding in the longitudinal direction thereof, the sleeve is fastened in translation to the shaft, and the encoding zone is adapted to encode a linear displacement.

12. A method of manufacturing an encoder as claimed in any one of claims 1 to 6, comprising a sleeve (2), an encoder element (4) made of elastoferrite and a protective layer (10) made of a polymer which exhibits a surface abrasion resistance to the elastoferrite, **characterized:**
- **in that** said sleeve (2), a blank of said encoder element (4) and a preform of said protective layer (10) are placed concentrically in a first half mold, said blank being at least partially in contact with said sleeve and said preform covering at least partially the encoding zone (6) of the blank of the encoder element; and
- **in that** a hot pressing is performed with the aid of a second half mold so as to crosslink said blank of the encoder element.
